# EUROPEAN PATENT SPECIFICATION

(11) **EP 4 438 335 B1**
(45) Date of publication and mention of the grant of the patent: **01.04.2026**
(21) Application number: 24157856.6
(22) Date of filing: 15.02.2024
(51) Int. Cl.: B60C 11/00, B60C 11/12, B60C 11/03

(54) **TIRE**
REIFEN
PNEUMATIQUE

(30) Priority: 27.03.2023 JP 2023049372
(43) Date of publication of application: 02.10.2024
(73) Proprietor: Sumitomo Rubber Industries, Ltd., Kobe-shi, Hyogo 651-0072 (JP)
(72) Inventor: ITO, Shuhei, Kobe-shy, Hyogo, 651-0072 (JP)
(74) Representative: Manitz Finsterwald Patent- und Rechtsanwaltspartnerschaft mbB

(56) References cited:
- EP-A1- 3 950 386
- EP-A1- 4 052 927
- WO-A1-2017/105496
- JP-A- 2005 035 404
- JP-A- H05 254 314
- JP-B2- 4 231 265
- US-A1- 2020 262 245
- US-A1- 2022 009 291
- US-A1- 2022 219 492

## Description

### BACKGROUND OF THE INVENTION

### Field of the Invention

The present invention relates to a tire.

### Background Art

The rolling resistance performance and the wear resistance of a tire may decrease due to deformation of land portions during running. A tire including a tread having a circumferential narrow groove in order to increase the tread stiffness has been known. The circumferential narrow groove has a narrow groove width with which sidewalls thereof come into contact with each other when the tire comes into contact with the ground. Therefore, in the tire having the circumferential narrow groove, land portions can support each other when the tire comes into contact with the ground. Accordingly, the tread stiffness is improved, and the rolling resistance performance and the wear resistance of the tire are improved (see, for example, Japanese Laid-Open Patent Publication No. 2018-202956).

In the technology described in Japanese Laid-Open Patent Publication No. 2018-202956, the tread stiffness increases and the groove volume decreases in the late stage of wear, so that there is room for improvement in terms of grip performance on a wet road surface (hereinafter simply referred to as "wet performance"). Tires having circumferential narrow groove are disclosed in US 2022/219492 A1 and WO 2017/105496 A1.

The present invention has been made in view of the above circumstances, and an object of the present invention is to provide a tire that can suppress a decrease in grip performance and wet performance in a late stage of wear while improving rolling resistance performance and wear resistance.

### SUMMARY OF THE INVENTION

A tire according to an aspect of the present invention is directed to a tire including a tread. The tread has a layered structure including a base layer located on an innermost side in a tire radial direction, a first cap layer located on an outermost side in the tire radial direction, and a second cap layer located between the base layer and the first cap layer in the tire radial direction. The tread has a tread pattern having a pair of shoulder circumferential grooves, and at least one circumferential narrow groove located inward of each of the shoulder circumferential grooves in a tire width direction. The circumferential narrow groove has a narrow portion located on an outer side in the tire radial direction, and a wide portion located on an inner side in the tire radial direction and having a larger groove width than the narrow portion. The narrow portion has a groove width with which sidewalls of the narrow portion come into contact with each other when the tire comes into contact with a road surface. A complex elastic modulus of the second cap layer is lower than a complex elastic modulus of the first cap layer. A bottom portion of the shoulder circumferential groove and a bottom portion of the circumferential narrow groove are placed in the second cap layer, and a thickness of the base layer is smaller than a thickness of the second cap layer at the bottom portion of the shoulder circumferential groove and the bottom portion of the circumferential narrow groove. The complex elastic modulus is measured according to the standards of JIS K6394, wherein the measurement conditions are:
initial strain = 10%,
dynamic distortion = ±1%,
frequency = 10 Hz,
mode = stretch mode,
temperature = 70°C,
and the test piece geometry is: 40 mm long × 4 mm wide × 1 mm thick.

Preferably, in the tire, a maximum groove width of the wide portion is located at a depth of 70 to 90% when a depth from an opening position of the circumferential narrow groove to a bottom portion of the wide portion is defined as 100%.

Preferably, in the tire, the wide portion is configured to gradually widen to a position of the maximum groove width from a position of connection with the narrow portion toward the bottom portion. The maximum groove width is located on the bottom portion side with respect to a middle position of a depth from the position of connection to the bottom portion.

Preferably, in the tire, the wide portion is placed in the second cap layer.

Preferably, in the tire, the maximum groove width of the wide portion is three to seven times the groove width of the narrow portion.

Preferably, in the tire, a loss tangent of the second cap layer is higher than a loss tangent of the first cap layer. The loss tangent is measured according to the standards of JIS K6394, wherein the measurement conditions are:
initial strain = 10%,
dynamic distortion = ±1%,
frequency = 10 Hz,
mode = stretch mode,
temperature = 0°C,
and the test piece geometry is: 40 mm long × 4 mm wide × 1 mm thick.

The tread has a shoulder land portion located on an outermost side in the tire width direction demarcated by the shoulder circumferential groove. Preferably, a difference between a thickness of the first cap layer at a center in the tire width direction of the shoulder land portion and a thickness of the first cap layer at an equator plane of the tread is within 2.0 mm.

Preferably, in the tire, the complex elastic modulus of the second cap layer is higher than a complex elastic modulus of the base layer.

Preferably, the tire is a heavy duty tire.

According to the present invention, a tire that can suppress a decrease in grip performance and wet performance in a late stage of wear while improving rolling resistance performance and wear resistance, is obtained.

### BRIEF DESCRIPTION OF THE DRAWINGS

FIG. 1 is a cross-sectional view showing a part of a tire according to one embodiment of the present invention;
FIG. 2 is an enlarged cross-sectional view showing a part of the tire in FIG. 1; and
FIG. 3 is an enlarged cross-sectional view showing the vicinity of a circumferential narrow groove in FIG. 2.

### DETAILED DESCRIPTION

Hereinafter, the present invention will be described in detail based on preferred embodiments with appropriate reference to the drawings.

In the present invention, a state where a tire is fitted on a standardized rim, the internal pressure of the tire is adjusted to a standardized internal pressure, and no load is applied to the tire is referred to as standardized state. In addition, unless otherwise specified, the description is based on the tire in a state where no wear due to running has occurred.

In the present invention, unless otherwise specified, the dimensions and angles of each component of the tire are measured in the standardized state. The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that includes a tread having a surface that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present invention, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, vulcanization aids such as zinc oxide and stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a complex elastic modulus (hereinafter simply referred to as "E*") and a loss tangent (hereinafter referred to simply as "tan δ") of a component formed from a crosslinked rubber, of the components included in the tire, are measured according to the standards of JIS K6394. The measurement conditions are as follows.
Initial strain = 10%
Dynamic distortion = ±1%
Frequency = 10 Hz
Mode = stretch mode
Temperature = 0°C or 70°C

In this measurement, a test piece (40 mm long × 4 mm wide × 1 mm thick) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, E* is represented as E* at 70°C.

In the present invention, tan δ is represented as tan δ at 0°C.

### [Findings on Which Present Invention Is Based]

If the stiffness of a tread is excessively low, a tire deforms excessively during running, and cannot resist a road surface, resulting in a reduced grip force. Conversely, if the stiffness of the tread is excessively high, the deformation of the tire during running is excessively small, resulting in a slip and a reduced grip force. Therefore, the tire is required to have appropriate tread stiffness in order to provide an optimum grip force.

In the tire, wear of the tread due to running causes a decrease in the volume of each land portion, thereby reducing deformation of each land portion. Therefore, in general, in the late stage of wear, a tire has increased tread stiffness and decreased grip performance. In addition, wear of the tread decreases the groove volume of a circumferential groove, resulting in decreased wet performance.

### [Details of Embodiments of Present Invention]

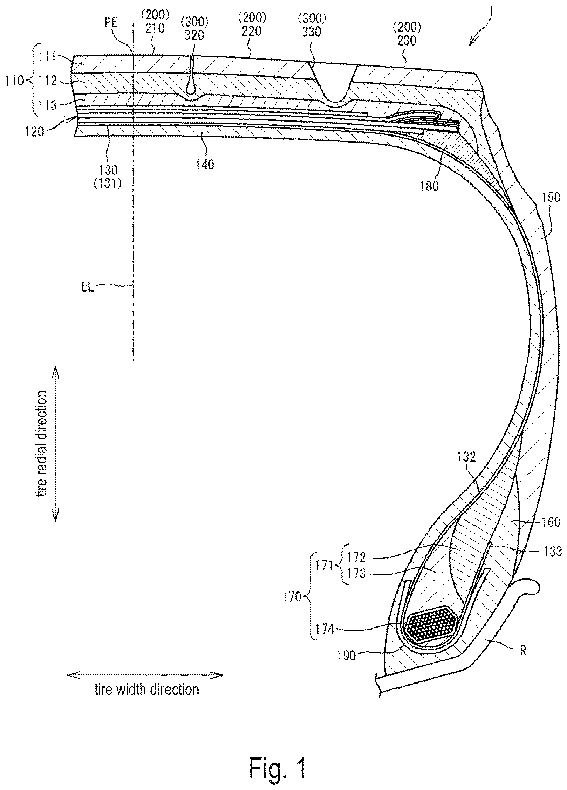

FIG. 1 is a cross-sectional view showing a part of a tire 1 according to one embodiment of the present invention. The tire 1 is mounted to a vehicle such as a truck and a bus. The tire 1 is a heavy duty tire.

FIG. 1 shows a part of a cross-section of the tire 1 taken along a plane including the rotation axis of the tire 1. The tire 1 includes a tread 110, a belt 120, a carcass 130, an inner liner 140, a pair of sidewalls 150, a pair of chafers 160, a pair of beads 170, a pair of cushion layers 180, and a pair of steel reinforcing layers 190.

An alternate long and short dash line EL shown in FIG. 1 indicates the equator plane of the tire 1. An equator PE is the point of intersection of the outer surface of the tread 110 and the equator plane EL. In the case where a circumferential groove 300 described later is formed on the equator plane EL, the equator PE is specified on the basis of a virtual outer surface of the tread 110 obtained on the assumption that the circumferential groove 300 is not provided thereon. In FIG. 1, the width direction of the tire 1 (hereinafter sometimes referred to simply as "tire width direction") and the radial direction of the tire 1 (hereinafter sometimes referred to simply as "tire radial direction") are indicated by double-headed arrows. In the tire width direction, the alternate long and short dash line EL side is the inner side in the tire width direction, and the sidewall 150 side is the outer side in the tire width direction. In the tire radial direction, the rotation axis side is the inner side in the tire radial direction, and the tread 110 side is the outer side in the tire radial direction. In addition, the direction perpendicular to the drawing sheet of FIG. 1 is the circumferential direction of the tire 1.

In FIG. 1, the tire 1 is fitted onto a rim R. The rim R is a standardized rim. The interior of the tire 1 is filled with air to adjust the internal pressure of the tire 1. The tire 1 fitted on the rim R is also referred to as a tire-rim assembly. The tire-rim assembly includes the rim R and the tire 1 fitted on the rim R.

Each sidewall 150 is connected to an end of the tread 110. The sidewall 150 extends inward in the tire radial direction from the end of the tread 110. The sidewall 150 is formed from a crosslinked rubber for which cut resistance is taken into consideration.

Each chafer 160 is located inward of the sidewall 150 in the tire radial direction. The chafer 160 comes into contact with the rim R. The chafer 160 is formed from a crosslinked rubber for which wear resistance is taken into consideration.

The bead 170 includes an apex 171 and a core 174. The core 174 extends in the circumferential direction. The core 174 includes a wound wire made of steel. The core 174 has a substantially hexagonal cross-sectional shape.

The apex 171 is located outward of the core 174 in the tire radial direction. The apex 171 includes an inner apex 173 and an outer apex 172. The inner apex 173 extends outward in the tire radial direction from the core 174. The outer apex 172 is located outward of the inner apex 173 in the tire radial direction. The inner apex 173 is formed from a hard crosslinked rubber. The outer apex 172 is formed from a crosslinked rubber that is more flexible than the inner apex 173.

The carcass 130 is located inward of the belt 120, the pair of sidewalls 150, and the pair of chafers 160. The carcass 130 extends on and between a first bead 170 and a second bead 170 out of the pair of beads 170.

The carcass 130 includes at least one carcass ply 131. The carcass 130 of the tire 1 is composed of one carcass ply 131. The carcass ply 131 is turned up around each core 174 from the inner side toward the outer side in the tire width direction. The carcass ply 131 includes a ply body 132 which extends on and between a first core 174 and a second core 174, and a pair of turned-up portions 133 which are connected to the ply body 132 and turned up around the respective cores 174 from the inner side toward the outer side in the tire width direction.

The carcass ply 131 includes a large number of carcass cords aligned with each other, which are not shown. These carcass cords are covered with a topping rubber. Each carcass cord intersects the equator plane EL. The carcass 130 has a radial structure. The carcass cords of the tire 1 are steel cords.

Each cushion layer 180 is located between the belt 120 and the carcass 130 on the end side of the belt 120. The cushion layer 180 is formed from a flexible crosslinked rubber. The cushion layer 180 alleviates strain generated at the end of the belt 120.

Each steel reinforcing layer 190 is located at a bead portion. The steel reinforcing layer 190 is turned up around the core 174 from the inner side toward the outer side in the tire width direction along the carcass ply 131. The steel reinforcing layer 190 includes a large number of filler cords aligned with each other, which are not shown. These filler cords are covered with a topping rubber. Steel cords are used as the filler cords.

The inner liner 140 is located inward of the carcass 130. The inner liner 140 is joined to the inner surface of the carcass 130 via an insulation (not shown) formed from a crosslinked rubber. The inner liner 140 forms an inner surface of the tire 1. The inner liner 140 is formed from a crosslinked rubber that has an excellent air blocking property. The inner liner 140 maintains the internal pressure of the tire 1.

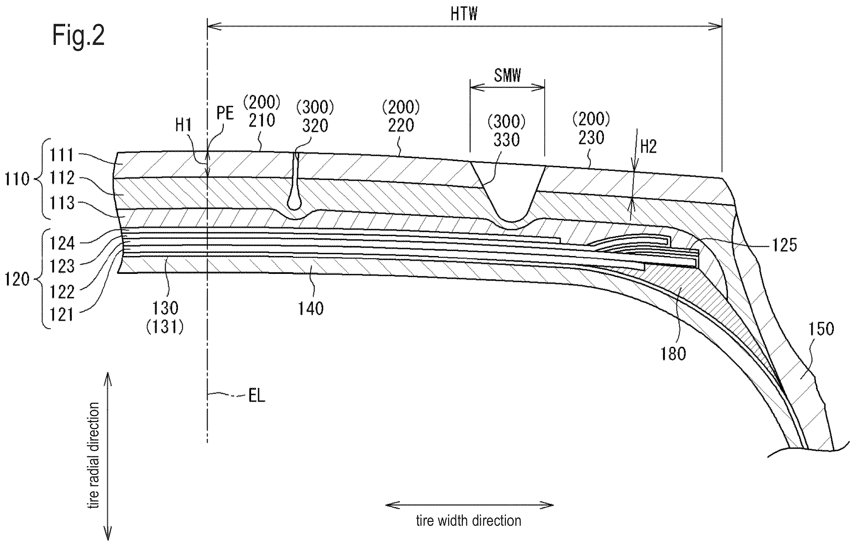

FIG. 2 shows a part of the tire 1 shown in FIG. 1. FIG. 2 shows an enlarged cross-sectional view of the vicinity of the tread 110 of the tire 1. In FIG. 2, the tire width direction and the tire radial direction are indicated by double-headed arrows. The direction perpendicular to the drawing sheet of FIG. 2 is the circumferential direction of the tire 1.

In the tire 1, the belt 120 includes a plurality of belt plies. The belt plies include a first belt ply 121, a second belt 122, a third belt ply 123, and a fourth belt ply 124 (hereinafter sometimes referred to as "each belt ply 120"). Each belt ply 120 includes a large number of belt cords aligned with each other (not shown). The belt cords are cords made of a metal. Specifically, the belt cords are steel cords. The density of the belt cords in each belt ply 120 are not less than 15 ends/5 cm and not greater than 30 ends/5 cm.

Among each belt ply 120, the first belt ply 121 is located innermost in the tire radial direction. The second belt 122 is located outward of the first belt ply 121 in the tire radial direction. The third belt ply 123 is located outward of the second belt 122 in the tire radial direction. The fourth belt ply 124 is located outward of the third belt ply 123 in the tire radial direction. The fourth belt ply 124 is located outermost in the tire radial direction.

The respective belt plies 120 are aligned in the tire radial direction. Each belt ply 120 is placed such that both ends thereof are opposed to each other across the equator plane EL. Each belt ply 120 intersects the equator plane EL. The ends of each belt ply 120 are located on both sides of the equator plane EL.

Each end of each belt ply 120 is covered with an edge member 125 formed from a crosslinked rubber. In addition, the edge member 125 contributes to maintaining the interval between the end of the second belt 122 and the end of the third belt ply 123. Accordingly, the durability of the belt 120 is improved.

### [Basic Configuration of Tread]

The tread 110 comes into contact with a road surface at the outer surface thereof. In the tire 1, the tread 110 is formed on the belt 120. In the tire 1, the tread 110 includes a first cap layer 111, a second cap layer 112, and a base layer 113. The first cap layer 111 is located on the outermost side of the tread 110 in the tire radial direction. The base layer 113 is located on the innermost side of the tread 110 in the tire radial direction. The second cap layer 112 is located between the first cap layer 111 and the base layer 113 of the tread 110 in the tire radial direction. As shown in FIG. 2, the first cap layer 111 is stacked on the second cap layer 112, and the second cap layer 112 is stacked on the base layer 113. That is, the tread 110 of the tire 1 has a layered structure including the first cap layer 111, the second cap layer 112, and the base layer 113.

Circumferential grooves 300 are formed on the tread 110 so as to continuously extend in the circumferential direction, thereby forming a tread pattern. In the tire 1, four circumferential grooves 300 are formed on the tread 110. The tire 1 has five land portions 200 demarcated by the four circumferential grooves 300. The tread 110 has a pair of circumferential narrow grooves 320 and a pair of shoulder circumferential grooves 330 as the circumferential grooves 300. The tread 110 has one first land portion 210, a pair of second land portions 220, and a pair of shoulder land portions 230 as the land portions 200.

The pair of shoulder circumferential grooves 330 are formed on the outermost sides of the tread 110 in the tire width direction. The pair of circumferential narrow grooves 320 are formed on the inner side of the tread 110 in the tire width direction with respect to the pair of shoulder circumferential grooves 330. The first land portion 210 is located in a region demarcated by the pair of circumferential narrow grooves 320. The pair of second land portions 220 are located in regions demarcated by the pair of circumferential narrow grooves 320 and the pair of shoulder circumferential grooves 330, respectively. The pair of shoulder land portions 230 are located on the outermost sides in the tire width direction demarcated by the shoulder circumferential grooves 330.

In the tire 1, the first cap layer 111 of the tread 110 is initially worn due to running. As the wear progresses, the second cap layer 112 appears on the outer surface of the tire 1. Hereinafter, the period when the second cap layer 112 begins to appear due to wear of the tread 110 caused by running is referred to as "late stage of wear". In addition, the period prior to the late stage of wear is referred to as "early stage of wear".

### [Basic Effect and Problem of Circumferential Narrow Grooves]

It is known that when a tread has a circumferential narrow groove having a narrow groove width with which sidewalls thereof come into contact with each other when a tire comes into contact with the ground, the rolling resistance performance and the wear resistance of the tire are improved. Each circumferential narrow groove 320 has a narrow groove width with which sidewalls thereof come into contact with each other when the tire 1 comes into contact with the ground. Accordingly, the rolling resistance performance and the wear resistance of the tire 1 are improved.

In the tire, wear of the tread due to running increases the tread stiffness and decreases the groove volume of the circumferential groove, resulting in a decreased grip force and decreased wet performance. A conventional tire having a circumferential narrow groove on a tread cannot sufficiently suppress a decrease in grip force and wet performance due to wear of the tread caused by running. Hereinafter, the configuration of the tire 1 that suppresses a decrease in grip performance and wet performance in the late stage of wear while improving rolling resistance performance and wear resistance, will be described.

### [Details and Effects of Layered Structure]

In the late stage of wear, the grip performance of the tire decreases due to an increase in tread stiffness. In general, the tread stiffness can be reduced by lowering a complex elastic modulus (E*) of the tread at a temperature of 70°C. In the tire 1, a complex elastic modulus (E*2) of the second cap layer 112 at a temperature of 70°C is lower than a complex elastic modulus (E*1) of the first cap layer 111 at a temperature of 70°C. Accordingly, in the tire 1, the second cap layer 112, which has a lower complex elastic modulus at a temperature of 70°C, appears in the late stage of wear. Therefore, in the tire 1, an increase in tread stiffness in the late stage of wear is suppressed, and grip performance is ensured.

In the tire 1, the E*1 of the first cap layer 111 is higher than the E*2 of the second cap layer 112. Accordingly, in the tire 1, the tread stiffness of the tire 1 in the early stage of wear is maintained. Therefore, in the tire 1, the rolling resistance performance and the wear resistance in the early stage of wear are ensured.

The E*1 of the first cap layer 111 is not less than 5.0 MPa and preferably not less than 6.5 MPa. When the E*1 is not less than 5.0 MPa, the rolling resistance performance and the wear resistance in the early stage of wear are ensured. When the E*1 is not less than 6.5 MPa, excellent rolling resistance performance and wear resistance are exhibited in the early stage of wear. In addition, if the tread stiffness is excessively high, the grip performance is decreased. Therefore, the E*1 is not greater than 12.0 MPa and preferably not greater than 10.5 MPa. When the E*1 is not greater than 12.0 MPa, the grip performance in the early stage of wear is ensured. When the E*1 is not greater than 10.5 MPa, excellent grip performance is exhibited in the early stage of wear.

The E*2 of the second cap layer 112 is lower than the E*1 of the first cap layer 111. The E*2 is set as appropriate in consideration of the grip performance, the rolling resistance performance, and the wear resistance in the late stage of wear. In the tire 1, the E*2 is preferably 75 to 90% of the E*1. Accordingly, rapid changes in grip performance, rolling resistance performance, and wear resistance from the early stage of wear to the late stage of wear are suppressed. Therefore, grip performance, rolling resistance performance, and wear resistance are stably exhibited from the early stage of wear to the late stage of wear.

The E*2 of the second cap layer 112 is preferably higher than a complex elastic modulus (E*3) of the base layer 113 at a temperature of 70°C. The complex elastic modulus (E*3) of the base layer 113 at a temperature of 70°C is preferably lower than the E*2 of the second cap layer 112. In the tire 1, the E*2 is preferably 110 to 125% of the E*3. Accordingly, grip performance, rolling resistance performance, and wear resistance are stably exhibited from the early stage of wear to the late stage of wear.

In the late stage of wear, the wet performance of a tire decreases. In general, the wet performance improves as a loss tangent (tan δ) of the tread at a temperature of 0°C increases. In the tire 1, a loss tangent (tan δ2) of the second cap layer 112 at a temperature of 0°C is higher than a loss tangent (tan δ1) of the first cap layer 111 at a temperature of 0°C. Therefore, in the tire 1, the second cap layer 112, which has a higher loss tangent at a temperature of 0°C, appears in the late stage of wear. Accordingly, in the tire 1, a decrease in wet performance in the late stage of wear is suppressed.

The tan δ2 of the second cap layer 112 is not less than 0.17 and preferably not less than 0.20. When the tan δ2 is not less than 0.17, the wet performance in the late stage of wear is ensured. When the tan δ2 is not less than 0.20, a decrease in wet performance is effectively suppressed in the late stage of wear. A high tan δ may cause generation of heat during running, which may increase the rolling resistance. Therefore, the tan δ2 is not greater than 0.30 and preferably not greater than 0.27. When the tan δ2 is not greater than 0.30, the rolling resistance performance in the late stage of wear is ensured. When the tan δ2 is not greater than 0.27, a decrease in rolling resistance performance is effectively suppressed in the late stage of wear.

The tan δ1 of the first cap layer 111 is lower than the tan δ2 of the second cap layer 112. The tan δ1 is set as appropriate in consideration of the wet performance, the rolling resistance performance, etc., in the early stage of wear before the second cap layer 112 appears. The tan δ1 is preferably 80 to 90% of the tan δ2. Accordingly, rapid changes in wet performance and rolling resistance performance from the early stage of wear to the late stage of wear are suppressed. Therefore, wet performance and rolling resistance performance are stably exhibited from the early stage of wear to the late stage of wear.

The first cap layer 111, the second cap layer 112, and the base layer 113 are configured to have an almost uniform thickness, except for each circumferential groove 300 and the vicinity of a bottom portion thereof. In the tire 1, the ratio of the thickness of the first cap layer 111 to the thickness of the tread 110 is 25 to 45%. The ratio of the thickness of the second cap layer 112 to the thickness of the tread 110 is 30 to 50%. The ratio of the thickness of the base layer 113 to the thickness of the tread 110 is 5 to 45%. The thickness of the tread 110 is 15.0 to 25.0 mm.

### [Details and Effects of Circumferential Grooves]

HTW shown in FIG. 2 denotes the width in the tire width direction from the equator PE to the edge on the outermost side in the tire width direction of the outer surface of the shoulder land portion 230. SMW denotes the maximum groove width of the shoulder circumferential groove 330. The groove width SMW is larger than a groove width NW of the circumferential narrow groove 320 described later.

The ratio of the groove width SMW to the width HTW exceeds 4.0%. Accordingly, the wet performance of the tire 1 is ensured. In addition, the ratio of the groove width SMW to the width HTW is not greater than 20%. Accordingly, the wear resistance of the tire 1 is ensured.

In the tire 1, the bottom portion of each circumferential groove 300 is located in the second cap layer 112. As shown in FIG. 2, the thickness of the base layer 113 is reduced in the vicinity of the bottom portion of each circumferential groove 300 such that the vicinity of the bottom portion of each circumferential groove 300 is covered with the second cap layer 112.

The depth of each circumferential groove 300 can be set as appropriate in consideration of the thickness and the layered structure of the tread 110. For example, the depth of each circumferential groove 300 of the tire 1 is 10 to 21 mm. From the viewpoint that the tire 1 can exhibit good wet performance, the depth of each circumferential groove 300 is preferably 13 to 18 mm.

In general, when a tire comes into contact with a road surface, the ground-contact pressure at the outer surface of the tread is higher on the inner side in the tire width direction than on the outer side in the tire width direction. Therefore, during running, the tread may be worn on the inner side in the tire width direction more than on the outer side in the tire width direction (hereinafter sometimes referred to simply as "uneven wear"). In the tire 1, the circumferential narrow grooves 320 are formed on the inner side in the tire width direction. Accordingly, in the tire 1, the above ground-contact pressure is distributed to each land portion 200 of the tread 110, so that uneven wear is suppressed. As a result, in the late stage of wear, the uniformity when the second cap layer 112 appears on the outer surface of the tread 110 is improved. Accordingly, in the tire 1, stable grip performance and wet performance are ensured from the early stage of wear to the late stage of wear.

H1 shown in FIG. 2 denotes the thickness of the first cap layer 111 at the equator plane EL. The thickness H1 is also the thickness of the first cap layer 111 at the center in the tire width direction of the outer surface of the first land portion 210. H2 denotes the thickness of the first cap layer 111 at the center in the tire width direction of the outer surface of the shoulder land portion 230. In the tire 1, a value obtained by subtracting the thickness H2 from the thickness H1 is -2.0 to +2.0 mm. That is, the tire 1 is configured such that the thickness difference from the thickness H1 is within 2.0 mm. Accordingly, the uniformity when the second cap layer 112 appears on the outer surface of the tread 110 in the late stage of wear is improved. Therefore, uneven wear of the tread 110 is suppressed, and the wear resistance of the tire 1 is improved. As a result, in the tire 1, stable grip performance and wet performance are ensured from the early stage of wear to the late stage of wear.

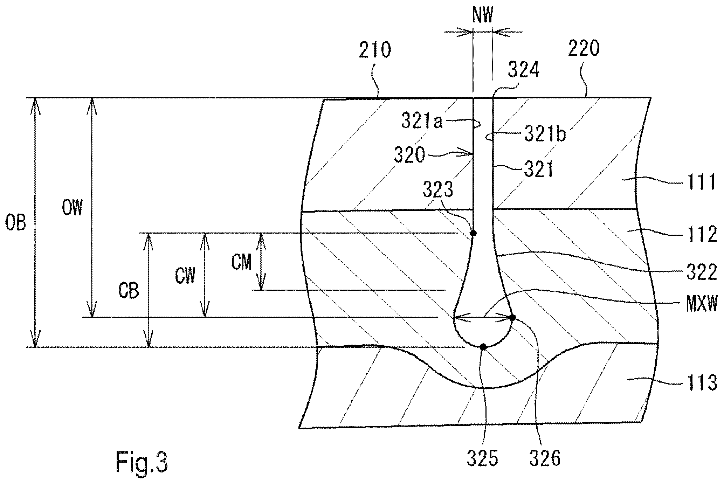

FIG. 3 is an enlarged cross-sectional view showing the vicinity of the circumferential narrow groove 320 in FIG. 2. The circumferential narrow groove 320 includes a narrow portion 321 on the outer side in the tire radial direction, and a wide portion 322 on the inner side in the tire radial direction. The narrow portion 321 and the wide portion 322 are connected by a connection portion 323. 324 shown in FIG. 3 denotes the opening of the circumferential narrow groove 320. The opening 324 is also the opening of the narrow portion 321. 325 shown in FIG. 3 denotes a bottom portion of the circumferential narrow groove 320. The bottom portion 325 is also a bottom portion of the wide portion 322. 326 shown in FIG. 3 denotes a maximum groove width portion of the wide portion 322. The maximum groove width portion 326 is also a maximum groove width portion of the circumferential narrow groove 320.

OB shown in FIG. 3 denotes the depth of the circumferential narrow groove 320. That is, the depth OB is the depth from the opening 324 to the bottom portion 325 in the tire radial direction. OW denotes the depth from the opening 324 to the maximum groove width portion 326 in the tire radial direction. CB denotes the depth from the connection portion 323 to the bottom portion 325 in the tire radial direction. CW denotes the depth from the connection portion 323 to the maximum groove width portion 326 in the tire radial direction. CM denotes the depth from the connection portion 323 to the middle position of the depth CB in the tire radial direction. NW denotes the groove width of the narrow portion 321. MXW denotes the groove width at the maximum groove width portion 326.

The narrow portion 321 has the almost uniform groove width NW from the opening 324 to the connection portion 323. The groove width NW is set to be a width with which a sidewall 321a and a sidewall 321b of the narrow portion 321 come into contact with each other when the tire 1 comes into contact with a road surface. The sidewall 321a is also a sidewall of the first land portion 210. The sidewall 321b is also a sidewall of the second land portion 220. That is, the tire 1 is configured such that the first land portion 210 and the second land portion 220 can support each other when the tire 1 comes into contact with a road surface. Accordingly, in the tire 1, the stiffness of the tread 110 in the early stage of wear is improved. Therefore, the rolling resistance performance and the wear resistance of the tire 1 are improved.

The groove width NW is not less than 1.0 mm and preferably not less than 1.5 mm. When the groove width NW is not less than 1.0 mm, the groove volume of the tire 1 is ensured, and the wet performance of the tire 1 is improved. When the groove width NW is not less than 1.5 mm, excellent wet performance is exhibited in the early stage of wear. The groove width NW is not greater than 3.0 mm and preferably not greater than 2.5 mm. When the groove width NW is not greater than 3.0 mm, the sidewall 321a and the sidewall 321b can come into sufficient contact with each other when the tire 1 comes into contact with a road surface. Therefore, the stiffness of the tread 110 is improved. Accordingly, the rolling resistance performance and the wear resistance of the tire 1 in the early stage of wear are improved. When the groove width NW is not greater than 2.5 mm, excellent rolling resistance performance and wear resistance are exhibited in the early stage of wear.

As described above, the narrow portion 321 of the tire 1 has the almost uniform groove width NW. Therefore, in the tire 1, the position where the width on the outer side in the tire radial direction with respect to the groove width MXW of the wide portion 322 is equal to the groove width NW is the connection portion 323. In the case where the groove width NW of the narrow portion 321 is not uniform, the position where the width on the outer side in the tire radial direction with respect to the groove width MXW of the wide portion 322 is not greater than 3.0 mm is the connection portion 323.

The groove width MXW is not less than three times and preferably not less than four times the groove width NW. When the groove width MXW is not less than three times the groove width NW, an increase in the stiffness of the tread 110 in the late stage of wear is suppressed. Therefore, the grip performance in the late stage of wear is improved. In addition, the drainage performance in the late stage of wear is ensured, and wet performance is improved. When the groove width MXW is not less than four times the groove width NW, excellent grip performance and wet performance are exhibited in the late stage of wear. The groove width MXW is not greater than seven times and preferably not greater than six times the groove width NW. When the groove width MXW is not greater than seven times the groove width NW, the stiffness of the tread 110 in the early stage of wear is ensured, and the rolling resistance performance and the wear resistance are improved. When the groove width MXW is not greater than six times the groove width NW, excellent rolling resistance performance and wear resistance are exhibited in the early stage of wear.

In general, in a tire, when the tread is worn beyond 70% of the groove depth thereof, a decrease in grip performance and wet performance due to an increase in tread stiffness and a decrease in the groove volume of the circumferential groove becomes significant. In the tire 1, the depth CW is set at the position of 70 to 90% of the depth OB. That is, the tire 1 is configured such that the maximum groove width portion 326 appears on the outer side of the tread 110 in the late stage of wear in which a decrease in grip performance and wet performance becomes significant. Accordingly, the tire 1 can effectively suppress a decrease in grip performance and wet performance in the late stage of wear.

A decrease in grip performance and wet performance in the late stage of wear progresses gradually. As described above, a decrease in grip performance and wet performance becomes significant when the tread is worn beyond 70% of the groove depth thereof. The tire 1 is configured such that the groove width gradually increases from the connection portion 323 toward the maximum groove width portion 326. Furthermore, the depth CW is located deeper than the depth CM. Therefore, in the tire 1, rapid changes in grip performance and wet performance in the late stage of wear are suppressed. As a result, stable grip performance and wet performance are exhibited in the late stage of wear.

As described above, the second cap layer 112 has a lower complex elastic modulus than the first cap layer 111. As shown in FIG. 3, in the tire 1, the wide portion 322 is placed in the second cap layer 112. That is, the tire 1 is configured such that the second cap layer 112, which is more flexible than the first cap layer 111, covers the wide portion 322. Accordingly, the stiffness of the tread 110 in the late stage of wear is made appropriate. As a result, the tire 1 exhibits excellent grip performance in the late stage of wear.

### [Other Modifications]

The tire 1 is a heavy duty tire, but the present invention is not limited thereto. For example, the present invention can be applied to a tire for a passenger car.

The tread 110 of the tire 1 has the five land portions 200 demarcated by the four circumferential grooves 300, but the present invention is not limited thereto. For example, the tire of the present invention can be configured to have more circumferential narrow grooves 320 than the tire 1.

The groove width of the narrow portion 321 can be set to vary from 1.5 to 3.0 mm. For example, the narrow portion of the tire of the present invention can be configured such that the groove width at the opening thereof is 1.5 mm, the groove width of the connection portion is 3.0 mm, and the groove width gradually increases. Accordingly, stable grip performance and wet performance are exhibited from the early stage of wear to the late stage of wear.

The above-described technology capable of suppressing a decrease in grip performance and wet performance in a late stage of wear while improving rolling resistance performance and wear resistance can be applied to various tires.

## Claims

1. A tire (1) comprising a tread (110), wherein
the tread (110) has
a layered structure including
a base layer (113) located on an innermost side in a tire radial direction,
a first cap layer (111) located on an outermost side in the tire radial direction, and
a second cap layer (112) located between the base layer (113) and the first cap layer (111) in the tire radial direction, and
a tread pattern having
a pair of shoulder circumferential grooves (330), and
at least one circumferential narrow groove (320) located inward of each of the shoulder circumferential grooves (330) in a tire width direction,
the circumferential narrow groove (320) has a narrow portion (321) located on an outer side in the tire radial direction, and a wide portion (322) located on an inner side in the tire radial direction and having a larger groove width (MXW) than the narrow portion (321),
the narrow portion (321) has a groove width (NW) with which sidewalls (321a, 321b) of the narrow portion (321) come into contact with each other when the tire (1) comes into contact with a road surface, and **characterized in that**
a complex elastic modulus (E*2) of the second cap layer (112) is lower than a complex elastic modulus (E*1) of the first cap layer (111), the complex elastic modulus being measured according to the standards of JIS K6394, wherein the measurement conditions are:
initial strain = 10%,
dynamic distortion = ±1%,
frequency = 10 Hz,
mode = stretch mode,
temperature = 70°C,
and the test piece geometry is: 40 mm long × 4 mm wide × 1 mm thick,
and wherein a bottom portion of the shoulder circumferential groove (330) and a bottom portion of the circumferential narrow groove (320) are placed in the second cap layer (112), and
a thickness of the base layer (113) is smaller than a thickness of the second cap layer (112) at the bottom portion of the shoulder circumferential groove (330) and the bottom portion of the circumferential narrow groove (320).

2. The tire (1) according to claim 1, wherein a maximum groove width (MXW) of the wide portion (322) is located at a depth of 70 to 90% when a depth from an opening (324) position of the circumferential narrow groove (320) to a bottom portion (325) of the wide portion (322) is defined as 100%.

3. The tire (1) according to claim 1 or 2, wherein
the wide portion (322) is configured to gradually widen to a position of the maximum groove width (MXW) from a position of connection with the narrow portion (321) toward the bottom portion (325), and
the maximum groove width (MXW) is located on the bottom portion side with respect to a middle position of a depth (CB) from the position of connection to the bottom portion (325).

4. The tire (1) according to any one of claims 1 to 3, wherein the wide portion (322) is placed in the second cap layer (112).

5. The tire (1) according to any one of claims 1 to 4, wherein the maximum groove width (MXW) of the wide portion (322) is three to seven times the groove width (NW) of the narrow portion (321).

6. The tire (1) according to any one of claims 1 to 5, wherein a loss tangent (tan δ2) of the second cap layer (112) is higher than a loss tangent (tan δ1) of the first cap layer (111), the loss tangent (tan δ1, tan δ2) according to the standards of JIS K6394, wherein the measurement conditions are:
initial strain = 10%,
dynamic distortion = ±1%,
frequency = 10 Hz,
mode = stretch mode,
temperature = 0°C,
and the test piece geometry is: 40 mm long × 4 mm wide × 1 mm thick.

7. The tire (1) according to any one of claims 1 to 6, wherein
the tread (110) has a shoulder land portion (230) located on an outermost side in the tire width direction demarcated by the shoulder circumferential groove (330), and
a difference between a thickness (H2) of the first cap layer (111) at a center in the tire width direction of the shoulder land portion (230) and a thickness (H1) of the first cap layer (111) at an equator plane (EL) of the tread (110) is within 2.0 mm.

8. The tire (1) according to any one of claims 1 to 7, wherein the complex elastic modulus (E*2) of the second cap layer (112) is higher than a complex elastic modulus (E*3) of the base layer (113).

9. The tire (1) according to any one of claims 1 to 8, wherein the tire (1) is a heavy duty tire.

## Patentansprüche

1. Reifen (1), umfassend eine Lauffläche (110), wobei
die Lauffläche (110) aufweist
eine geschichtete Struktur, umfassend
eine Basisschicht (113), die sich auf einer innersten Seite in einer Reifenradialrichtung befindet,
eine erste Deckschicht (111), die sich auf einer äußersten Seite in der Reifenradialrichtung befindet, und
eine zweite Deckschicht (112), die sich zwischen der Basisschicht (113) und der ersten Deckschicht (111) in der Reifenradialrichtung befindet, und
ein Laufflächenprofil, aufweisend
ein Paar Schulterumfangsrillen (330), und
mindestens eine schmale Umfangsrille (320), die sich innen von jeder der Schulterumfangsrillen (330) in einer Reifenbreitenrichtung befindet,
wobei die schmale Umfangsrille (320) einen schmalen Abschnitt (321), der sich auf einer Außenseite in der Reifenradialrichtung befindet, und einen breiten Abschnitt (322) aufweist, der sich auf einer Innenseite in der Reifenradialrichtung befindet und eine größere Rillenbreite (MXW) als der schmale Abschnitt (321) aufweist,
wobei der schmale Abschnitt (321) eine Rillenbreite (NW) aufweist, mit der Seitenwände (321a, 321b) des schmalen Abschnitts (321) miteinander in Kontakt kommen, wenn der Reifen (1) mit einer Straßenoberfläche in Kontakt kommt, und **dadurch gekennzeichnet, dass**
ein komplexer Elastizitätsmodul (E*2) der zweiten Deckschicht (112) niedriger ist als ein komplexer Elastizitätsmodul (E*1) der ersten Deckschicht (111), wobei der komplexe Elastizitätsmodul gemäß den Normen von JIS K6394 gemessen wird, wobei die Messbedingungen sind:
Anfangsdehnung = 10%,
dynamische Verzerrung = ±1%,
Frequenz = 10 Hz,
Modus = Dehnungsmodus,
Temperatur = 70°C,
und die Probenstückgeometrie 40 mm lang x 4 mm breit x 1 mm dick ist,
und wobei ein Bodenabschnitt der Schulterumfangsrille (330) und ein Bodenabschnitt der schmalen Umfangsrille (320) in der zweiten Deckschicht (112) platziert sind, und
eine Dicke der Basisschicht (113) kleiner ist als eine Dicke der zweiten Deckschicht (112) an dem Bodenabschnitt der Schulterumfangsrille (330) und dem Bodenabschnitt der schmalen Umfangsrille (320).

2. Reifen (1) nach Anspruch 1, wobei sich eine maximale Rillenbreite (MXW) des breiten Abschnitts (322) in einer Tiefe von 70 bis 90 % befindet, wenn eine Tiefe von einer Position der Öffnung (324) der schmalen Umfangsrille (320) zu einem Bodenabschnitt (325) des breiten Abschnitts (322) als 100 % definiert ist.

3. Reifen (1) nach Anspruch 1 oder 2, wobei
der breite Abschnitt (322) so konfiguriert ist, dass er sich allmählich zu einer Position der maximalen Rillenbreite (MXW) von einer Position der Verbindung mit dem schmalen Abschnitt (321) zu dem Bodenabschnitt (325) hin erweitert, und
sich die maximale Rillenbreite (MXW) auf der Bodenabschnittsseite in Bezug auf eine mittlere Position einer Tiefe (CB) von der Position der Verbindung zu dem Bodenabschnitt (325) befindet.

4. Reifen (1) nach einem der Ansprüche 1 bis 3, wobei der breite Abschnitt (322) in der zweiten Deckschicht (112) platziert ist.

5. Reifen (1) nach einem der Ansprüche 1 bis 4, wobei die maximale Rillenbreite (MXW) des breiten Abschnitts (322) das Drei- bis Siebenfache der Rillenbreite (NW) des schmalen Abschnitts (321) beträgt.

6. Reifen (1) nach einem der Ansprüche 1 bis 5, wobei ein Verlusttangens (tan δ2) der zweiten Deckschicht (112) höher ist als ein Verlusttangens (tan δ1) der ersten Deckschicht (111), wobei der Verlusttangens (tan δ1, tan δ2) gemäß den Normen von JIS K6394 gemessen wird, wobei die Messbedingungen sind:
Anfangsdehnung = 10%,
dynamische Verzerrung = ±1%,
Frequenz = 10 Hz,
Modus = Dehnungsmodus,
Temperatur = 0°C,
und die Probenstückgeometrie 40 mm lang x 4 mm breit x 1 mm dick ist.

7. Reifen (1) nach einem der Ansprüche 1 bis 6, wobei
die Lauffläche (110) einen Schulterlandabschnitt (230) aufweist, der sich auf einer äußersten Seite in der Reifenbreitenrichtung befindet, die durch die Schulterumfangsrille (330) abgegrenzt ist, und
eine Differenz zwischen einer Dicke (H2) der ersten Deckschicht (111) an einer Mitte in der Reifenbreitenrichtung des Schulterlandabschnitts (230) und einer Dicke (H1) der ersten Deckschicht (111) an einer Äquatorebene (EL) der Lauffläche (110) innerhalb von 2,0 mm liegt.

8. Reifen (1) nach einem der Ansprüche 1 bis 7, wobei der komplexe Elastizitätsmodul (E*2) der zweiten Deckschicht (112) höher ist als ein komplexer Elastizitätsmodul (E*3) der Basisschicht (113).

9. Reifen (1) nach einem der Ansprüche 1 bis 8, wobei der Reifen (1) ein Schwerlastreifen ist.

## Revendications

1. Pneumatique (1) comprenant une bande de roulement (110), dans lequel la bande de roulement (110) présente
une structure en couches incluant
une couche de base (113) située sur un côté le plus à l'intérieur dans une direction radiale du pneumatique,
une première couche de chape (111) située sur un côté le plus à l'extérieur dans la direction radiale du pneumatique, et
une seconde couche de chape (112) située entre la couche de base (113) et la première couche de chape (111) dans la direction radiale du pneumatique, et
un motif de bande de roulement ayant
une paire de rainures circonférentielles d'épaulement (330), et
au moins une rainure étroite circonférentielle (320) située à l'intérieur de chacune des rainures circonférentielles d'épaulement (330) dans une direction de la largeur du pneumatique,
la rainure étroite circonférentielle (320) a une portion étroite (321) située sur un côté extérieur dans la direction radiale du pneumatique, et une portion large (322) située sur un côté intérieur dans la direction radiale du pneumatique et ayant une largeur de rainure (MXW) plus grande que la portion étroite (321),
la portion étroite (321) a une largeur de rainure (NW) avec laquelle des parois latérales (321a, 321b) de la portion étroite (321) viennent en contact l'une avec l'autre quand le pneumatique (1) vient en contact avec une surface routière, et
**caractérisé en ce que**
un module d'élasticité complexe (E*2) de la seconde couche de chape (112) est inférieur à un module d'élasticité complexe (E*1) de la première couche de chape (111), le module d'élasticité complexe étant mesuré selon les standards de la norme industrielle japonaise JIS K6394, les conditions de mesurage étant les suivantes :
contrainte initiale = 10 %,
distorsion dynamique = ± 1 %,
fréquence = 10 Hz,
mode = mode d'étirement,
température = 70 °C,
et la géométrie de la pièce d'essai est de : 40 mm de longueur × 4 mm de largeur × 1 mm d'épaisseur,
et dans lequel une portion de fond de la rainure circonférentielle d'épaulement (330) et une portion de fond de la rainure étroite circonférentielle (320) sont placées dans la seconde couche de chape (112), et
une épaisseur de la couche de base (113) est inférieure à une épaisseur de la seconde couche de chape (112) au niveau de la portion de fond de la rainure circonférentielle d'épaulement (330) et de la portion de fond de la rainure étroite circonférentielle (320).

2. Pneumatique (1) selon la revendication 1, dans lequel une largeur de rainure maximum (MXW) de la portion large (322) est située à une profondeur de 70 à 90 % quand une profondeur depuis une position d'ouverture (324) de la rainure étroite circonférentielle (320) jusqu'à une portion de fond (325) de la portion large (322) est définie comme étant de 100 %.

3. Pneumatique (1) selon la revendication 1 ou 2, dans lequel
la portion large (322) est configurée pour s'élargir graduellement jusqu'à une position de la largeur de rainure maximum (MXW) depuis une position de connexion avec la portion étroite (321) vers la portion de fond (325), et
la largeur de rainure maximum (MXW) est située sur le côté de portion de fond par rapport à une position médiane d'une profondeur (CB) depuis la position de connexion de la portion de fond (325).

4. Pneumatique (1) selon l'une quelconque des revendications 1 à 3, dans lequel la portion large (322) est placée dans la seconde couche de chape (112).

5. Pneumatique (1) selon l'une quelconque des revendications 1 à 4, dans lequel la largeur de rainure maximum (MXW) de la portion large (322) est de trois à sept fois la largeur de rainure (NW) de la portion étroite (321).

6. Pneumatique (1) selon l'une quelconque des revendications 1 à 5, dans lequel une tangente de perte (tan δ2) de la seconde couche de chape (112) est supérieure à une tangente de perte (tan δ1) de la première couche de chape (111), la tangente de perte (tan δ1, tan δ2) étant mesurée selon les standards de la norme industrielle japonaise JIS K6394, les conditions de mesurage étant les suivantes :
contrainte initiale = 10 %,
distorsion dynamique = ± 1 %,
fréquence = 10 Hz,
mode = mode d'étirement,
température = 0 °C,
et la géométrie de la pièce d'essai est de : 40 mm de longueur × 4 mm de largeur × 1 mm d'épaisseur.

7. Pneumatique (1) selon l'une quelconque des revendications 1 à 6, dans lequel
la bande de roulement (110) a une portion en relief d'épaulement (230) située sur un côté le plus à l'extérieur dans la direction de la largeur du pneumatique délimitée par la rainure circonférentielle d'épaulement (330), et
une différence entre une épaisseur (H2) de la première couche de chape (111) au niveau d'un centre dans la direction de la largeur du pneumatique de la portion en relief d'épaulement (230) et une épaisseur (H1) de la première couche de chape (111) au niveau d'un plan d'équateur (EL) de la bande de roulement (110) est à l'intérieur de 2,0 mm.

8. Pneumatique (1) selon l'une quelconque des revendications 1 à 7, dans lequel le module d'élasticité complexe (E*2) de la seconde couche de chape (122) est supérieur à un module d'élasticité complexe (E*3) de la couche de base (113).

9. Pneumatique (1) selon l'une quelconque des revendications 1 à 8, dans lequel le pneumatique (1) est un pneumatique pour service intensif.
